# EUROPEAN PATENT APPLICATION

(11) **EP 4 822 437 A1**
(43) Date of publication of application: **14.10.2026**
(21) Application number: 24910477.9
(22) Date of filing: 27.11.2024
(51) Int. Cl.: G03B 21/20

(54) **PROJECTION LIGHT SOURCE SYSTEM AND PROJECTION APPARATUS**

(30) Priority: 28.12.2023 CN 202323612220 U
(71) Applicant: APPOTRONICS CORPORATION LIMITED, Shenzhen, Guangdong 518000 (CN)
(72) Inventor: SHANGGUAN, Jianfeng, Shenzhen, Guangdong 518000 (CN); ZHANG, Xiangxiong, Shenzhen, Guangdong 518000 (CN); CHEN, Yiwei, Shenzhen, Guangdong 518000 (CN); LI, Yi, Shenzhen, Guangdong 518000 (CN)
(74) Representative: Gulde & Partner
(86) International application number: PCT/CN2024/134740
(87) International publication number: WO 2025/139544

(57) **Abstract**

A projection light source system (100) and a projection apparatus (1000). The projection light source system (100) is applied to a projection apparatus (1000) comprising a display chip (900). The projection light source system (100) comprises a light source module (10), a light guide system (20), a fluorescent color wheel (30) and a light-reflecting member (40). The light source module (10) emits a laser beam; the light guide system (20) is arranged on the optical path of the laser beam and transmits the laser beam to the fluorescent color wheel (30); the fluorescent color wheel (30) comprises a plurality of fluorescence excitation regions (31) having different colors, and the plurality of fluorescence excitation regions (31) sequentially receive the laser beam and reflect an illumination beam; the light-reflecting member (40) is arranged opposite the fluorescent color wheel (30), and the light guide system (20) is located between the fluorescent color wheel (30) and the light-reflecting member (40), such that the illumination beam and the laser beam have an overlapped portion; and the light-reflecting member (40) reflects the illumination beam to the display chip (900). In the projection light source system (100), the fluorescent color wheel (30) and the light-reflecting member (40) are oppositely spaced apart from each other, and the light guide system (20) is arranged between the fluorescent color wheel (30) and the light-reflecting member (40), such that the three have a relatively compact structure, and the space occupied by the projection light source system (100) can be significantly reduced.

## Description

### TECHNICAL FIELD

The present disclosure relates to the technical field of beam illumination, and in particular, to a projection light source system and a projection apparatus.

### BACKGROUND

With people's continuous increasing requirements for an interaction degree between a vehicle and an external environment, an existing vehicle integrates a projection apparatus on a vehicle-mounted headlamp of the vehicle, so that the vehicle has the function of projecting to the outside, and the vehicle can project a pattern onto an exterior facade of a building or the ground through the vehicle-mounted headlamp.

However, an accommodating space of the vehicle-mounted headlamp is limited, and various components in a traditional projection apparatus from a light source to a relay system, a display chip, and a projection lens generally follow an extension direction along a principal optical axis to arrange an optical path, such that these components are arranged relatively discretely, and the volume of the entire projection apparatus is relatively large. Therefore, integrating the projection apparatus with the vehicle-mounted headlamp is relatively difficult.

### SUMMARY

Embodiments of the present disclosure provide a projection light source system and a projection apparatus.

In a first aspect, the present disclosure provides a projection light source system that is applied to a projection apparatus including a display chip. The projection light source system includes a light source module, a light guiding system, a fluorescent color wheel, and a reflector. The light source module is configured to emit a laser beam. The light guiding system is disposed in an optical path of the laser beam and is configured to adjust an emission direction of the laser beam. The fluorescent color wheel has a plurality of fluorescent excitation regions of different colors. The light guiding system is configured to guide the laser beam to the fluorescent color wheel, the plurality of fluorescent excitation regions sequentially receive the laser beam, and each of the fluorescent excitation regions is configured to reflect an illumination beam under excitation of the laser beam. The reflector is disposed opposite to the fluorescent color wheel and is located in an optical path of the illumination beam. The light guiding system is located between the fluorescent color wheel and the reflector to allow a part of the optical path of the illumination beam to overlap with a part of the optical path of the laser beam, and the reflector is configured to reflect the illumination beam to the display chip.

In some optional embodiments, the light source module includes a monochromatic laser emitter configured to emit the laser beam of a designated color, and the light guiding system includes a filter disposed in the optical path of the laser beam and configured to reflect the laser beam of the designated color to the fluorescent color wheel.

In some optional embodiments, the designated color is blue; and the filter is a blue-reflecting and yellow-transmitting filter.

In some optional embodiments, the laser beam of the designated color excites the fluorescent color wheel to form the illumination beam, the filter is located in the optical path of the illumination beam and is configured to transmit the illumination beam, and the reflector is located on a side of the filter away from the fluorescent color wheel.

In some optional embodiments, the light guiding system further includes a focusing lens located between the monochromatic laser emitter and the filter, and the focusing lens is located in the optical path of the laser beam and is configured to converge the laser beam onto the filter.

In some optional embodiments, the light guiding system further includes an illumination lens, the illumination lens is disposed between the filter and the fluorescent color wheel and is configured to transmit the laser beam and the illumination beam, and the illumination beam passes through the illumination lens and the filter and is transmitted to the reflector.

In some optional embodiments, the reflector reflects the illumination beam to the display chip, the display chip generates a projection beam, and the projection beam is transmitted toward a space between the reflector and the light guiding system; and an optical axis of the filter does not intersect with an optical axis of the illumination lens, the filter is located at an edge of the optical path of the illumination beam between the illumination lens and the reflector, and the filter is located outside an optical path of the projection beam.

In some optional embodiments, the light guiding system includes an optical homogenizer located between the fluorescent color wheel and the reflector, the optical homogenizer has a first end surface and a second end surface opposite to each other, the first end surface faces the reflector, and the second end surface faces the fluorescent color wheel; the laser beam is transmitted to the optical homogenizer via the first end surface, homogenized by the optical homogenizer, and diverges to the fluorescent color wheel via the second end surface to form the illumination beam, and the illumination beam is transmitted to the optical homogenizer via the second end surface and transmitted to the reflector via the first end surface.

In some optional embodiments, a ratio between an area of the first end surface and an area of the second end surface is 6.25:1, and/or the first end surface is rectangular, and a length ratio of two adjacent side edges of the first end surface is 2:1; and/or the second end surface is rectangular, and a length ratio of two adjacent side edges of the second end surface is 2:1.

In some optional embodiments, the reflector has a reflective concave surface, the reflective concave surface is an aspherical surface, the illumination beam is transmitted toward the display chip after being reflected via the reflective concave surface, and a range of an incident angle of the illumination beam on a surface of the display chip is greater than or equal to 23° and less than or equal to 25°.

In a second aspect, the present disclosure further provides a projection apparatus. The projection apparatus includes a display chip and the projection light source system described above. The projection light source system is configured to form an illumination beam, and the display chip is disposed in an optical path of the illumination beam.

In some optional embodiments, the display chip is disposed corresponding to the reflector, the illumination beam is transmitted from the reflector to the display chip, the display chip receives the illumination beam and generates a projection beam, and the projection beam is emitted toward a space between the reflector and the fluorescent color wheel and intersects with the illumination beam.

In some optional embodiments, the projection apparatus further includes a projection lens. The display chip and the projection lens are arranged at intervals along a principal optical axis of the projection lens. When the projection apparatus is projected onto a plane of the principal optical axis of the projection lens, a projection of the reflector and a projection of the light guiding system are both located between the display chip and the projection lens.

The embodiments of the present disclosure provide a projection light source system. The projection light source system includes a light source module configured to emit a laser beam, and a light guiding system, a fluorescent color wheel and a reflector that are located in the optical path of the laser beam. The light source module should be understood as the light source of the projection light source system, that is, the light source of the projection apparatus. The light guiding system can adjust the direction of the laser beam to transmit the laser beam to the fluorescent color wheel. In some embodiments, the fluorescent color wheel can rotate around the rotation axis thereof. The fluorescent color wheel has a plurality of fluorescent excitation regions of different colors, and the plurality of fluorescent excitation regions of different colors are arranged around the rotation axis of the fluorescent color wheel. In some embodiments, the laser beam is transmitted to the fluorescent color wheel while maintaining a specific emission direction. The fluorescent excitation regions can sequentially rotate to positions corresponding to the laser beam, so as to receive the laser beam. Each fluorescent excitation region emits an illumination beam under the excitation effect of the laser beam, and the illumination beam is configured to be transmitted to the display chip. The colors of the illumination beams emitted by each of the fluorescent excitation regions are different.

In some embodiments, the reflector is located in the optical path of the illumination beam and is disposed corresponding to the display chip, so that the reflector can reflect the illumination beam to the display chip after receiving the illumination beam. In some embodiments, the reflector is disposed opposite to the fluorescent color wheel, which can effectively simplify the optical path of the illumination beam, shorten the transmission distance of the illumination beam, and reduce the space jointly occupied by the fluorescent color wheel and the reflector. Further, in some embodiments, the light guiding system is disposed between the fluorescent color wheel and the reflector, so that the space jointly occupied by the light guiding system, the fluorescent color wheel, and the reflector is relatively small, thereby further reducing the space occupied by the projection light source system. Under the arrangement of the embodiments of the present disclosure, a part of an optical path of the illumination beam overlaps with a part of an optical path of the laser beam, that is, the illumination beam between the fluorescent color wheel and the reflector partially overlaps with the laser beam between the light guiding system and the fluorescent color wheel.

Therefore, in the projection light source system according to the embodiments of the present disclosure, the fluorescent color wheel and the reflector are disposed opposite to each other at an interval, and the light guiding system is disposed between the fluorescent color wheel and the reflector, making the structure of the three relatively compact, significantly reducing the space occupied by the projection light source system, and improving the integration degree of the projection light source system.

### BRIEF DESCRIPTION OF DRAWINGS

In order to more clearly illustrate the technical solutions of the present disclosure, the drawings required in the description of the embodiments will be briefly described below. It is clear that, the drawings in the following description are only some embodiments of the present disclosure, and for those skilled in the art, other drawings may also be obtained according to these drawings without any creative effort.
FIG. 1 is a schematic structural diagram of a projection apparatus and a projection light source system according to an embodiment of the present disclosure.
FIG. 2 is a schematic structural diagram of the projection apparatus shown in FIG. 1 from another viewing angle.
FIG. 3 is a schematic structural diagram of the projection apparatus shown in FIG. 1 projected along a rotating shaft of a fluorescent color wheel.
FIG. 4 is a schematic structural diagram of an optical combination in the projection apparatus shown in FIG. 1.
FIG. 5 is a schematic structural diagram of an optical homogenizer in the projection apparatus shown in FIG. 1.
FIG. 6 is a schematic structural diagram of a right-handed coordinate system and edges of a display chip in the projection apparatus shown in FIG. 1.

Reference signs: 1000 - projection apparatus; 900 - display chip; 800 - projection lens; 100 - projection light source system; 10 - light source module; 11 - monochromatic laser emitter; 20 - light guiding system; 21 - filter; 211 - blue-reflecting and yellow-transmitting filter; 22 - focusing lens; 23 - illumination lens; 24 - optical homogenizer; 241 - first end surface; 242 - second end surface; 30 - fluorescent color wheel; 31 - fluorescent excitation region; 40 - reflector; 41 - reflective concave surface.

### DESCRIPTION OF EMBODIMENTS

To make those skilled in the art better understand the solutions of the present disclosure, the technical solutions in the embodiments of the present disclosure will be clearly and completely described below with reference to the drawings in the embodiments of the present disclosure. It should be noted that, the described embodiments are merely some but not all of the embodiments of the present disclosure. Based on embodiments of the present disclosure, all other embodiments obtained by those skilled in the art without any creative effort will fall within the scope of the present disclosure.

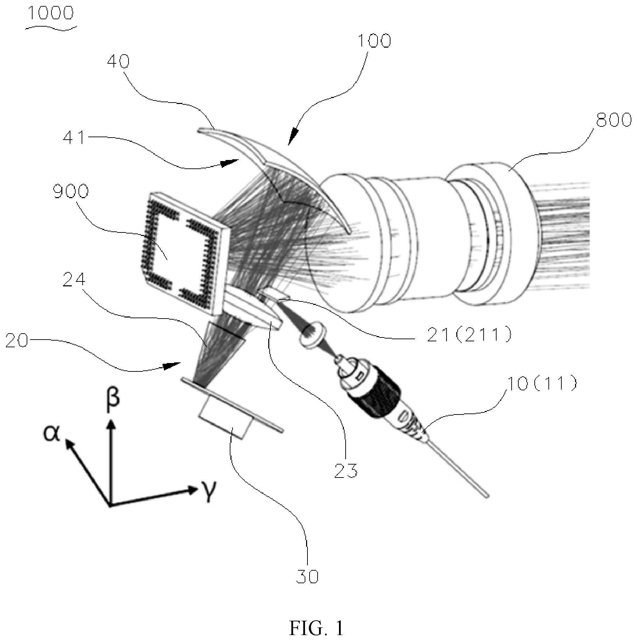

Referring to FIG. 1, an embodiment of the present disclosure provides a projection apparatus 1000 configured to project a colored image onto a projection surface. The projection apparatus 1000 may be applied to indoor projection, or the projection apparatus 1000 may be integrated on a movable device for outdoor projection. For example, in some embodiments, the projection apparatus 1000 is disposed on a vehicle-mounted headlamp of a vehicle, so that the vehicle has the function of projecting onto a building exterior facade or the ground to form a bright and clear color pattern/image/symbol.

In some embodiments, the projection apparatus 1000 may include a display chip 900 and a projection light source system 100, and the projection light source system 100 can emit an illumination beam. In some embodiments, by arranging the spatial positions of the projection light source system 100 and the display chip 900, the illumination beam can be transmitted to the display chip 900, and the display chip 900 can generate a projection beam under the irradiation of the illumination beam. In some embodiments, the color of the projection beam is not limited. The display chip 900 may directly generate a color projection beam, and the projection beam may directly form a color pattern when projected onto the projection surface. The projection beam may also be a monochromatic projection beam, and the display chip 900 can generate projection beams of multiple colors. A monochromatic grayscale image is formed when the projection beam of each color is projected onto the projection surface. Due to the visual persistence phenomenon of human eyes, a plurality of projection beams may be projected onto the projection surface according to a fixed time sequence and order, and grayscale images of different colors are synthesized into a color image on the projection surface, thereby implementing the color projection display function of the projection apparatus 1000. The type of the display chip 900 is not limited in the embodiments of the present disclosure. For example, in some embodiments, the display chip 900 is a Digital Micromirror Devices (DMD) chip. The DMD chip has a relatively small structure, and the optical path is simple, which is suitable for being integrated into a vehicle-mounted headlamp having a relatively small accommodating space.

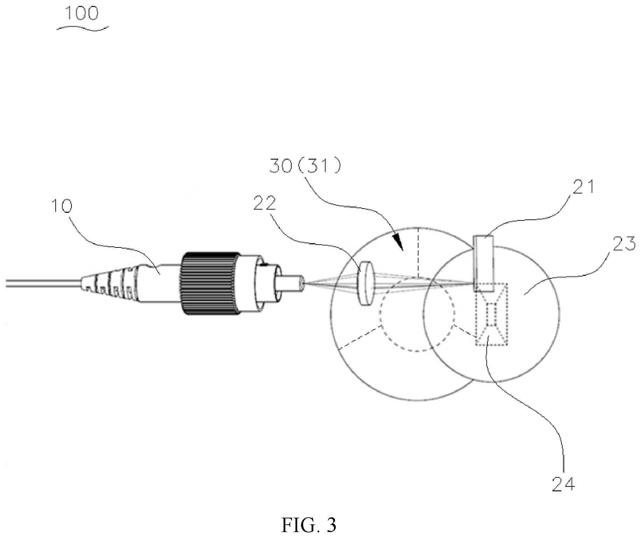

Referring to FIG. 1, FIG. 2 and FIG. 3, the projection light source system 100 according to the embodiments of the present disclosure may include a light source module 10 configured to emit a laser beam, and a light guiding system 20 and a fluorescent color wheel 30 that are located in an optical path of the laser beam. The light source module 10 should be understood as the light source of the projection light source system 100, that is, the light source of the projection apparatus 1000. The light guiding system 20 may receive the laser beam and change the emission direction of the laser beam, so as to transmit the laser beam to other components for subsequent processing. For example, in some embodiments, the light guiding system 20 may adjust the direction of the laser beam to transmit the laser beam to the fluorescent color wheel 30. In some embodiments, the fluorescent color wheel 30 may rotate around the rotation axis thereof. The fluorescent color wheel 30 has a plurality of fluorescent excitation regions 31 of different colors, and the plurality of fluorescent excitation regions of different colors are arranged around the rotation axis of the fluorescent color wheel 30. In some embodiments, the laser beam is transmitted to the fluorescent color wheel 30 while maintaining a specific emission direction. The fluorescent excitation regions 31 can sequentially rotate to positions corresponding to the laser beam, so as to receive the laser beam. Each fluorescent excitation region 31 emits an illumination beam under the excitation effect of the laser beam, and the illumination beam is configured to be transmitted to the display chip 900. The colors of the illumination beams emitted by each of the fluorescent excitation regions 31 are different.

Referring to FIG. 1, FIG. 2 and FIG. 3, the projection light source system 100 according to the embodiments of the present disclosure further includes a reflector 40, and the reflector 40 is configured to transmit the illumination beam to the display chip 900. In some embodiments, the reflector 40 has an aspherical reflective concave surface 41. The reflector 40 reflects the illumination beam via the reflective concave surface 41, and the magnification of the reflective concave surface 41 is 1:1. As an example, the reflector 40, i.e. the reflective concave surface 41, is located in the optical path of the illumination beam and is disposed corresponding to the display chip 900, so that the reflector 40 can reflect the illumination beam to the display chip 900 after receiving the illumination beam. In some embodiments, the illumination beam is transmitted to the display chip 900 under the reflection of the reflective concave surface 41. The range of the incident angle of the illumination beam on the surface of the display chip 900 is greater than or equal to 23° and less than or equal to 25°, so that the reflector 40 may be located outside the optical path of the projection beam generated by the display chip 900, thereby preventing the reflector 40 from blocking the projection beam, and further causing relatively low quality of the projected image.

In some embodiments, the reflector 40 is disposed opposite to the fluorescent color wheel 30, which can effectively simplify the optical path of the illumination beam, shorten the transmission distance of the illumination beam, and reduce the space jointly occupied by the fluorescent color wheel 30 and the reflector 40. Further, in some embodiments, the light guiding system 20 is disposed between the fluorescent color wheel 30 and the reflector 40, so that the space jointly occupied by the light guiding system 20, the fluorescent color wheel 30, and the reflector 40 is relatively small, thereby further reducing the space occupied by the projection light source system 100. Under the arrangement of the embodiments of the present disclosure, a part of the optical path of the illumination beam overlaps with a part of the optical path of the laser beam, that is, the illumination beam between the fluorescent color wheel 30 and the reflector 40 partially overlaps with the laser beam between the light guiding system 20 and the fluorescent color wheel 30.

In the projection light source system 100 according to the embodiments of the present disclosure, the fluorescent color wheel 30 and the reflector 40 are disposed opposite to each other at an interval, and the light guiding system 20 is disposed between the fluorescent color wheel 30 and the reflector 40, making the structure of the three relatively compact, significantly reducing the space occupied by the projection light source system 100, and improving the integration degree of the projection light source system 100.

It can be seen from the above that, in some embodiments, the display chip 900 and the reflector 40 of the projection apparatus 1000 are disposed corresponding to each other, so that the display chip 900 can receive the illumination beam, and the display chip 900 can generate the projection beam under the action of the illumination beam. In some embodiments, the emission direction of the projection beam is adjusted by adjusting the angle of the display chip 900, so that the projection beam is emitted toward the space between the reflector 40 and the fluorescent color wheel 30. Therefore, under the arrangement of the embodiments of the present disclosure, the projection beam intersects with the illumination beam, that is, the projection beam emitted from the display chip 900 intersects with the illumination beam between the fluorescent color wheel 30 and the reflector 40. Such an arrangement of the embodiments of the present disclosure enables components of the projection apparatus 1000 other than the display chip 900 and the projection light source system 100 to be disposed near the projection light source and the display chip 900, so as to avoid excessive dispersion of multiple components and various optical systems of the projection apparatus 1000. In some embodiments, the reflector 40, the fluorescent color wheel 30 and the light guiding system 20 may be regarded as an optical combination D. It should be understood from the above that the display chip 900 is located on a side of the optical combination D, and the projection beam emitted by the display chip 900 is emitted toward the optical combination D and avoids various components in the optical combination D.

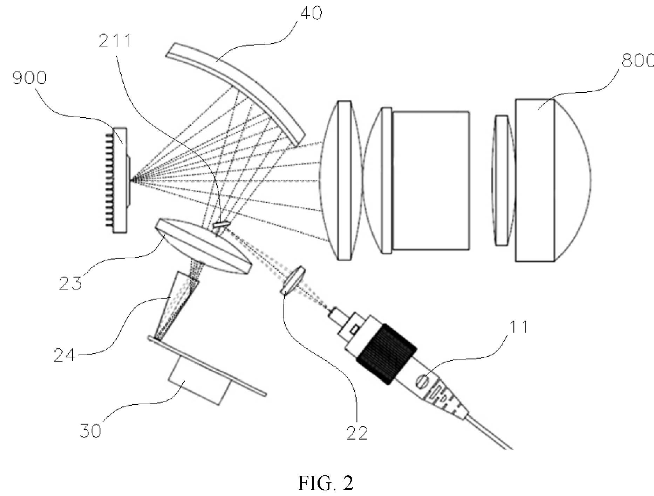

Referring to FIG. 1 and FIG. 2, in some embodiments, the projection apparatus 1000 further includes a projection lens 800. The projection lens 800 may include a plurality of lenses, and optical axes of the plurality of lenses are all in the same straight line to form the principal optical axis of the projection lens 800. In some embodiments, the display chip 900 and the projection lens 800 are substantially arranged along the principal optical axis of the projection lens 800, so that the display chip 900 can correspond to the projection lens 800 to a high degree. Further, the projection beam emitted by the display chip 900 may be relatively directly transmitted to the projection lens 800. The projection beam is projected onto the projection surface after steps such as convergence processing and color correction processing of the projection lens 800, and the projection lens 800 can improve the projection imaging quality.

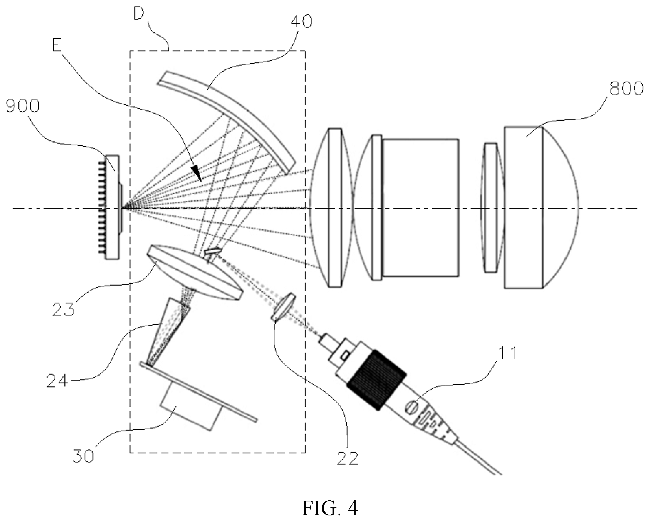

Referring to FIG. 4, it can be seen from the above that, in some embodiments, the projection lens 800 is disposed on a side of the optical combination D away from the display chip 900, so as to receive the projection beam emitted by the display chip 900. Therefore, it should be understood that the optical combination D is disposed between the display chip 900 and the projection lens 800. As an example, in some embodiments, the reflector 40 and the light guiding system 20 are both located between the display chip 900 and the projection lens 800. The reflector 40 and the light guiding system 20 are disposed at an interval. There is an overlapping portion between the space between the reflector 40 and the light guiding system 20 and the space between the display chip 900 and the projection lens 800. The overlapping space may be referred to as an imaging space E, and the illumination beam and the projection beam are transmitted within the imaging space E. It can be understood that, the reflector 40, the display chip 900, the light guiding system 20, and the projection lens 800 are arranged around a center point, and jointly define the imaging space E. Therefore, in the embodiments of the present disclosure, various components of the projection apparatus 1000 are arranged relatively compactly, which can effectively reduce a volume of the projection apparatus 1000, so that the projection apparatus 1000 is adapted to a structure of the vehicle-mounted headlamp. In some embodiments, a position adjustment mechanism, such as a swinging member, may be additionally provided and is connected between the vehicle and the projection apparatus 1000 to adjust the angle of the projection lens 800, so that the projection apparatus 1000 can project toward both a relatively high projection surface and the ground.

In some embodiments, the light source module 10 includes a monochromatic laser emitter 11, which may be selected according to a designated color. For example, in some embodiments, the designated color is set to blue. Therefore, a laser emitted by the monochromatic laser emitter 11 is blue. It can be seen from the above that the fluorescent color wheel 30 can receive the laser beam and reflect the illumination beam. In order to ensure the purity and light intensity of the reflected illumination beam, in some embodiments, the light guiding system 20 may further include a filter 21. The filter 21 can reflect the laser beam of the designated color and transmit light of the non-designated color. For example, in some embodiments, the laser emitted by the monochromatic laser emitter 11 is blue, and the filter 21 is correspondingly selected as a blue-reflecting and yellow-transmitting filter 211. The blue-reflecting and yellow-transmitting filter 211 can screen out a pure blue laser beam, and the blue laser beam is transmitted toward the fluorescent color wheel 30 by setting the spatial angle of the blue-reflecting and yellow-transmitting filter 211. In some embodiments, the reflectivity of the blue-reflecting and yellow-transmitting filter 211 to the blue laser beam is greater than 99.5%, and the transmittance to yellow light is greater than 98%, so as to make the purity of the laser beam be at a relatively high level.

Referring to FIG. 1, FIG. 2 and FIG. 3, the fluorescent color wheel 30 according to the embodiments of the present disclosure has at least three fluorescent excitation regions 31. One of the fluorescent excitation regions 31 is coated with a red fluorescent powder layer. The red fluorescent powder layer may generate a red illumination beam under the excitation of the blue laser beam, and a divergence angle of the red illumination beam on the fluorescent color wheel 30 is 180°. One of the fluorescent excitation regions 31 is coated with a green fluorescent powder layer. The green fluorescent powder layer may generate a green illumination beam under the excitation of the blue laser beam, and a divergence angle of the green illumination beam on the fluorescent color wheel 30 is 180°. One of the fluorescent excitation regions 31 is coated with a blue fluorescent powder layer. After receiving the blue laser beam, the blue fluorescent powder layer reflectively scatters the blue laser beam to form a blue illumination beam, and a divergence angle of the blue illumination beam on the fluorescent color wheel 30 is 180°. In some embodiments, by providing the blue-reflecting and yellow-transmitting filter 211, each fluorescent excitation region 31 can receive the blue laser beam having relatively high purity, so that the generated illumination beam is relatively pure, thereby avoiding interference of stray light on the fluorescent excitation region 31, making the light intensity of the illumination beam relatively high, and improving the illumination efficiency of the projection light source system 100.

Referring to FIG. 1, FIG. 2 and FIG. 3, the light guiding system 20 according to the embodiments of the present disclosure further includes a focusing lens 22, and the focusing lens 22 is located between the monochromatic laser emitter 11 and the filter 21. The focusing lens 22 is located in the optical path of the laser beam. The focusing lens 22 can reduce the outer diameter of the laser beam and substantially converge the laser beam onto the filter 21, so that the light spot formed by the laser beam on the filter 21 is relatively small, and the light utilization rate is relatively high. Therefore, in some embodiments, the size of the filter 21 may be set to be relatively small. For example, the length of the filter 21 is greater than or equal to 5 mm and less than or equal to 9 mm, the width of the filter 21 is greater than or equal to 1.5 mm and less than or equal to 3 mm, and the thickness of the filter 21 is greater than or equal to 0.5 mm and less than or equal to 1 mm. In some embodiments, the focal length of the focusing lens 22 is relatively small, and is greater than or equal to 6 mm and less than or equal to 7 mm, which can make the distance between the filter 21 and the focusing lens 22 relatively small and reduce the space occupied by the light guiding system 20.

Referring to FIG. 1, FIG. 2 and FIG. 3, the light guiding system 20 according to the embodiments of the present disclosure further includes an illumination lens 23. The illumination lens 23 is disposed between the filter 21 and the fluorescent color wheel 30, so that the illumination lens 23 is also disposed between the fluorescent color wheel 30 and the reflector 40. As an example, the filter 21 changes the optical path of the laser beam, so that the laser beam is transmitted toward the fluorescent color wheel 30. The illumination lens 23 is disposed in the optical path of the laser beam, and can finely adjust the optical path direction of the laser beam, so that the laser beam can be transmitted to the fluorescent color wheel 30 more accurately and in a greater amount. On the other hand, the illumination lens 23 according to the embodiments of the present disclosure can also increase the outer diameter of the laser beam and reduce the power density of the laser beam, so as to avoid the thermal quenching phenomenon occurring on the fluorescent color wheel 30 under the irradiation of the laser beam having relatively high power density. The fluorescent color wheel 30 is excited to generate the illumination beam and the illumination beam is transmitted toward the reflector 40. The illumination lens 23 is disposed in the optical path of the illumination beam, and can converge the illumination beam and reduce the divergence degree of the illumination beam, so that the illumination beam is transmitted to the reflector 40 in a relatively large amount. Therefore, in some embodiments, the illumination lens 23 is provided in the projection light source system 100, which can reduce the loss of the light beam during transmission, thereby improving the illumination efficiency and brightness of the projection light source system 100. In some embodiments, the distance between the filter 21 and the illumination lens 23 is greater than or equal to 1 mm and less than or equal to 3 mm, so as to further reduce the space occupied by the light guiding system 20.

It can be seen from the above that the light guiding system 20 according to the embodiments of the present disclosure is disposed between the reflector 40 and the fluorescent color wheel 30, and the illumination lens 23 is disposed between the filter 21 and the fluorescent color wheel 30, so that the filter 21 is located between the reflector 40 and the illumination lens 23. As an example, the filter 21 has a first surface and a second surface disposed opposite to each other. The illumination lens 23 is disposed opposite to the first surface, and the reflector 40 is correspondingly disposed on the second surface. Illumination beams of a plurality of colors sequentially generated by the fluorescent color wheel 30 are transmitted toward the illumination lens 23, and the illumination beams pass through the illumination lens 23 and are transmitted toward the reflector 40. In some embodiments, the filter 21 is located in the optical path of the illumination beam between the illumination lens 23 and the reflector 40, so that the components of the projection light source system 100 can be arranged relatively compactly, thereby reducing the occupied space of the projection light source system 100.

In some embodiments, the filter 21 is disposed at an edge position in the optical path of the illumination beam, so as to reduce the influence of the filter 21 on the transmission of the illumination beam. When projected along the direction of the optical path of the illumination beam, the projected area of the filter 21 is far smaller than the projected area of the illumination beam. As an example, in some embodiments, the filter 21 deviates from the optical axis of the illumination lens 23. For example, in some embodiments, any structure of the filter 21 is ensured not to be collinear with the optical axis of the illumination lens 23, so that the filter 21 avoids the optical path of the illumination beam as much as possible, making the illumination beam obtained by the display chip 900 relatively uniform, ensuring the quality of the projected image formed by the final projection beam, and avoiding relatively low color uniformity, yellowing or darkening at the edge of the projected image. In addition, in some embodiments, under a condition that the display chip 900 receives the illumination beam and generates the projection beam to be transmitted toward the space between the reflector 40 and the light guiding system 20, the filter 21 is located outside the optical path of the projection beam, so as to avoid direct influence on the projected image.

Referring to FIG. 2, in some embodiments, the optical axis of the illumination lens 23 is substantially parallel to and spaced from the rotation axis of the fluorescent color wheel 30, that is, the optical axis of the illumination lens 23 is substantially perpendicular to the normal line of the fluorescent color wheel 30. In some embodiments, under such arrangement, the laser beam is transmitted to the fluorescent color wheel 30 substantially along a direction perpendicular to the surface of the fluorescent color wheel 30, and the transmission direction of the illumination beam is substantially consistent with the direction of the optical axis of the illumination lens 23, so as to reduce scattering of the illumination beam, and to enable the illumination beam to be transmitted to the illumination lens 23 as much as possible, thereby enabling the reflector 40 to receive more illumination beams, and improving the projection effect of the projection apparatus.

Referring to FIG. 1, FIG. 2 and FIG. 5, the light guiding system 20 according to the embodiments of the present disclosure may further include an optical homogenizer 24. The optical homogenizer 24 is located in the optical path of the laser beam, so that the laser beam is transmitted to the fluorescent color wheel 30 after being homogenized by the optical homogenizer 24. As an example, in some embodiments, the optical homogenizer 24 is located between the illumination lens 23 and the fluorescent color wheel 30, that is, the optical homogenizer 24 is located between the fluorescent color wheel 30 and the reflector 40. In some embodiments, the optical homogenizer 24 has a first end surface 241 and a second end surface 242 opposite to each other. The first end surface 241 faces the reflector 40, that is, faces the illumination lens 23, and the second end surface 242 faces the fluorescent color wheel 30. After being converged by the illumination lens 23, the laser beam is transmitted to the optical homogenizer 24 via the first end surface 241, and after being homogenized by the optical homogenizer 24, the laser beam diverges to the fluorescent color wheel 30 via the second end surface 242. Subsequently, the corresponding fluorescent excitation region 31 reflects the illumination beam. The illumination beam is transmitted to the optical homogenizer 24 via the second end surface 242, and then transmitted to the illumination lens 23 via the first end surface 241. The illumination beam is transmitted to the reflector 40 after being converged by the illumination lens 23. In some embodiments, the optical homogenizer 24 is provided to make the laser beam with light intensity in Gaussian distribution be transmitted to the fluorescent reflection region on the fluorescent color wheel 30 after being homogenized. On one hand, the laser beam is more uniform after being homogenized, which brings about an advantage that the illumination beam reflected by the fluorescent color wheel 30 is also relatively uniform, and the display effect of the final projected image can be ensured. On the other hand, the light intensity of the high-intensity laser beam is weakened to a certain extent after being homogenized, which can avoid thermal quenching phenomenon occurring on the fluorescent powder sheet on the fluorescent excitation region 31 under the action of the laser beam with relatively high power density, prevent damage to the fluorescent color wheel 30, and prolong the service life of the fluorescent color wheel 30 and the projection apparatus 1000.

Referring to FIG. 1 and FIG. 2, in some embodiments, the distance between the fluorescent color wheel 30 and the second end surface 242 of the optical homogenizer 24 is greater than or equal to 0.2 mm and less than or equal to 0.5 mm. The distance can avoid the distance between the optical homogenizer 24 and the fluorescent color wheel 30 from being excessively small, avoid mutual collision between the fluorescent color wheel 30 and the optical homogenizer 24 during rotation of the fluorescent color wheel 30, and avoid the distance between the optical homogenizer 24 and the fluorescent color wheel 30 from being excessively large to reduce the collection efficiency of the optical homogenizer 24 for fluorescence, so that the optical homogenizer 24 can efficiently collect light of the illumination beam excited by the fluorescent color wheel 30, reduce loss of light, and improve the illumination efficiency and brightness of the projection light source system 100.

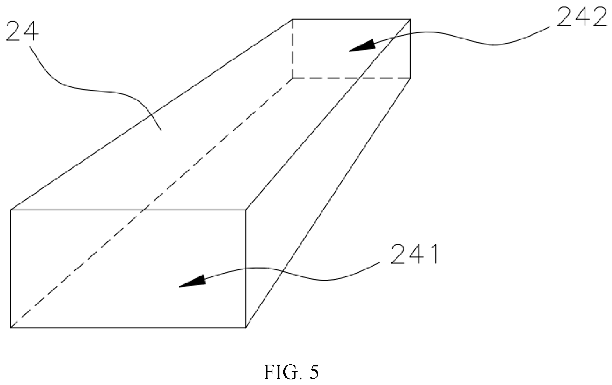

Referring to FIG. 2 and FIG. 5, in some embodiments, the ratio between the first end surface 241 and the second end surface 242 of the optical homogenizer 24 is 6.25:1, that is, the area of the first end surface 241 is greater than the area of the second end surface 242. In some embodiments, the first end surface 241 corresponds to the illumination lens 23. The area of the first end surface 241 is set to be relatively large and wide, so that the optical homogenizer 24 can receive more laser beams, that is, more light from the light source. The second end surface 242 corresponds to the fluorescent color wheel 30. The area of the second end surface 242 is set to be relatively small and narrow, so that the laser beam emitted from the second end surface 242 is relatively thin, and excessive divergence of the laser beam can be avoided. In combination with the foregoing, the laser beam of the embodiments of the present disclosure is transmitted substantially perpendicular to the fluorescent color wheel 30, and the distance between the fluorescent color wheel 30 and the second end surface 242 of the optical homogenizer 24 is relatively small, enabling the second end surface 242 to effectively receive the illumination beam reflected by the fluorescent color wheel 30.

In some embodiments, the optical homogenizer 24 is formed as a truncated pyramid structure. The first end surface 241 is rectangular, and the length ratio of two adjacent side edges of the first end surface 241 is 2:1. The second end surface 242 is also rectangular, and the length ratio of two adjacent side edges of the second end surface 242 is 2:1. The long side edge of the first end surface 241 is parallel to the long side edge of the second end surface 242, with the ratio of 2.5:1 therebetween. The short side edge of the first end surface 241 is parallel to the short side edge of the second end surface 242, with the ratio of 2.5:1 therebetween. In other embodiments, the optical homogenizer 24 may be formed as a truncated cone structure.

Referring to FIG. 1 and FIG. 2, the transmission path of the laser beam in the entire projection apparatus 1000 is specifically described with reference to the foregoing description as follows: the monochromatic laser emitter 11 emits a designated monochromatic laser beam, the laser beam is converged by the focusing lens 22 and then transmitted to the filter 21; the filter 21 reflects the laser beam of the designated color (the designated color in the embodiments is blue) to the illumination lens 23; the laser beam of the designated color is finely adjusted by the illumination lens 23 and then transmitted to the optical homogenizer 24; after being homogenized by the optical homogenizer 24, the laser beam is transmitted to one of the fluorescent excitation regions 31 on the fluorescent color wheel 30; a fluorescent powder layer of a certain color is formed on the fluorescent excitation region 31, and the fluorescent powder layer of the color reflects an illumination beam of the color after being excited; the illumination beam sequentially passes through the optical homogenizer 24, the illumination lens 23 and the filter 21 and is transmitted to the reflector 40, and is reflected by the reflector 40 to the display chip 900; the display chip 900 processes the illumination beam and generates a projection beam, and the projection beam is transmitted to the projection lens 800 and projected onto the projection surface after color correction processing or convergence processing of the projection lens 800.

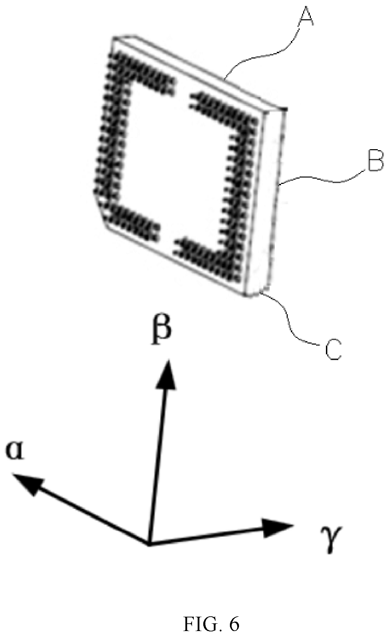

Referring to FIG. 6, a plurality of components in the embodiments of the present disclosure need to undergo angle adjustment and installation, so that the laser beam, the illumination beam, and the projection beam are transmitted according to the optical path described above. As an example, in some embodiments, the display chip 900 has a substantially cube structure. A right-handed coordinate system is determined based on three edges of the display chip 900 intersecting two by two. A length edge A of the display chip 900 extends along an α-axis direction, a width edge B of the display chip 900 extends along a β-axis direction, and a thickness edge C of the display chip 900 extends along a γ-axis direction. A plurality of components are introduced into the right-handed coordinate system.

Referring to FIG. 1, in some embodiments, the monochromatic laser emitter 11 emits a laser beam. In the initial state, the laser beam extends along a positive direction of the γ-axis, and the monochromatic laser emitter 11 then rotates counterclockwise by 38° around the α-axis (counterclockwise in the right-handed coordinate system, the same hereinafter), so as to switch to a target state. In some embodiments, in the initial state of the focusing lens 22, the optical axis of the focusing lens 22 is parallel to the γ-axis. In the target state, the optical axis of the focusing lens 22 is collinear with the optical path of the laser beam. In some embodiments, the filter 21 is a cube. In the initial state, the normal line of the surface of the filter 21 is parallel to the γ-axis, and the longest edge of the filter 21 is parallel to the α-axis. The filter 21 rotates counterclockwise around the α-axis by an angle greater than or equal to 77° and less than or equal to 78°, and rotates counterclockwise around the β-axis by an angle greater than or equal to 0° and less than or equal to 2°, so as to switch to the target state. In some embodiments, in the initial state of the illumination lens 23, the optical axis of the illumination lens 23 is parallel to the γ-axis. Subsequently, the illumination lens 23 rotates counterclockwise by 116° around the α-axis to switch to the target state. In some embodiments, in the initial state of the truncated-pyramid-shaped optical homogenizer 24, the normal line of the first end surface 241 is parallel to the γ-axis, and the length edge of the first end surface 241 is parallel to the α-axis, and the optical homogenizer 24 then rotates counterclockwise by 116° around the α-axis to switch to the target state. In some embodiments, in the initial state of the fluorescent color wheel 30, the rotation axis of the fluorescent color wheel 30 is parallel to the γ-axis. When the fluorescent color wheel 30 is in the target state, the rotation axis of the fluorescent color wheel 30 is parallel to the optical axis of the illumination lens 23. In some embodiments, in the initial state of the reflector 40, the opening of the reflective concave surface 41 of the reflector 40 faces the positive direction of the γ-axis, and the optical axis of the reflective concave surface 41 is parallel to the γ-axis, and the reflector 40 then rotates counterclockwise by 125° around the α-axis to switch to the target state. The coordinate system according to the embodiments of the present disclosure is established based on the display chip 900, and the display chip 900 does not undergo an angle change in the coordinate system. In some embodiments, in the initial state of the projection lens 800, the principal optical axis of the projection lens 800 is parallel to the γ-axis, and the projection lens 800 does not undergo an angle change. Only angle changes among various components are involved herein, and the positional relationship among various components may be referred to the foregoing.

In summary, the projection light source system 100 according to the embodiments of the present disclosure includes a light source module 10 configured to emit a laser beam, and a light guiding system 20, a fluorescent color wheel 30, and a reflector 40 that are located in the optical path of the laser beam. The light source module 10 should be understood as the light source of the projection light source system 100, that is, the light source of the projection apparatus 1000. The light guiding system 20 can adjust the direction of the laser beam to transmit the laser beam to the fluorescent color wheel 30. In some embodiments, the fluorescent color wheel 30 can rotate around the rotation axis thereof. The fluorescent color wheel 30 has a plurality of fluorescent excitation regions 31 of different colors, and the plurality of fluorescent excitation regions of different colors are arranged around the rotation axis of the fluorescent color wheel 30. In some embodiments, the laser beam is transmitted to the fluorescent color wheel 30 while maintaining a specific emission direction. The fluorescent excitation regions 31 can sequentially rotate to positions corresponding to the laser beam, so as to receive the laser beam. Each fluorescent excitation region 31 emits an illumination beam under the excitation effect of the laser beam, and the illumination beam is configured to be transmitted to the display chip 900. The colors of the illumination beams emitted by each of the fluorescent excitation regions 31 are different.

In some embodiments, the reflector 40 is located in the optical path of the illumination beam and is disposed corresponding to the display chip 900, so that the reflector 40 can reflect the illumination beam to the display chip 900 after receiving the illumination beam. In some embodiments, the reflector 40 is disposed opposite to the fluorescent color wheel 30, which can effectively simplify the optical path of the illumination beam, shorten the transmission distance of the illumination beam, and reduce the space jointly occupied by the fluorescent color wheel 30 and the reflector 40. Further, in some embodiments, the light guiding system 20 is disposed between the fluorescent color wheel 30 and the reflector 40, so that the space jointly occupied by the light guiding system 20, the fluorescent color wheel 30, and the reflector 40 is relatively small, thereby further reducing the space occupied by the projection light source system 100. Under the arrangement of the embodiments of the present disclosure, a part of an optical path of the illumination beam overlaps with a part of an optical path of the laser beam, that is, the illumination beam between the fluorescent color wheel 30 and the reflector 40 partially overlaps with the laser beam between the light guiding system 20 and the fluorescent color wheel 30.

Therefore, in the projection light source system 100 according to the embodiments of the present disclosure, the fluorescent color wheel 30 and the reflector 40 are disposed opposite to each other at an interval, and the light guiding system 20 is disposed between the fluorescent color wheel 30 and the reflector 40, making the structure of the three relatively compact, significantly reducing the space occupied by the projection light source system 100, and improving the integration degree of the projection light source system 100.

In the specification of the present disclosure, certain terms are used in the specification and claims to refer to specific components. Those skilled in the art should understand that, hardware manufacturers may use different nouns to refer to the same component. The specification and claims do not distinguish components by differences in names, but take functional differences of components as the distinguishing criterion. The term "comprise" mentioned throughout the specification and claims is an open-ended expression and shall be interpreted as "including but not limited to". The term "substantially" means that those skilled in the art can solve the technical problem within a certain error range and substantially achieve the technical effect.

In the description of the present disclosure, it should be understood that terms such as "upper", "lower", "front", "rear", "left", "right", and "inner", which indicate orientation or positional relationship, are based on the orientation or positional relationship shown in the accompanying drawings, and are merely for the convenience of describing the present disclosure and simplifying the description, rather than indicating or implying that the referred device or element must have a specific orientation, be constructed and operated in a specific orientation, and therefore cannot be understood as a limitation on the present disclosure.

In the present disclosure, unless otherwise expressly specified and limited, terms such as "mounted", "coupled", "connected", and "fixed" should be understood broadly. For example, it may be a fixed connection, or a detachable connection, or an integral connection; it may be a mechanical connection, or an electrical connection; it may be a direct connection, or an indirect connection through an intermediate medium, or internal communication between two elements, or merely surface contact. For those of ordinary skill in the art, the specific meanings of the above terms in the present disclosure can be understood according to the specific circumstances.

In the description of the present specification, reference to the terms "an embodiment", "some embodiments", "an example", "a specific example", "some examples", or the like means that a specific feature, structure, material, or characteristic described in connection with the embodiments or examples is included in at least one embodiment or example of the present disclosure. In the specification, the schematic description of the above-described terms is not necessary to refer to the same embodiment or example. In addition, the described specific features, structures, materials, or characteristics can be combined in an appropriate way in any one or more embodiments or examples. In addition, those skilled in the art may combine and associate different embodiments or examples described in this specification and features of different embodiments or examples, without conflicting with each other.

In addition, the terms "first" and "second" are merely used for descriptive purposes, and cannot be understood as indicating or implying relative importance or implicitly indicating the number of technical features indicated. Therefore, features defined by "first" and "second" may explicitly or implicitly include at least one of the features. In the description of the present disclosure, "a plurality of" means at least two, for example, two, three, and the like, unless specifically defined otherwise.

As above, it should be noted that, the above embodiments are merely for illustrating the present disclosure but not intended to provide any limitation. Although the present disclosure has been described in detail with reference to the above-described embodiments, it should be understood by those skilled in the art that, it is still possible to modify the technical solutions described in the above embodiments or to equivalently replace some of the technical features therein, but these modifications or replacements do not cause the essence of corresponding technical solutions to depart from the scope and the spirit of the present disclosure.

## Claims

1. A projection light source system, applied to a projection apparatus comprising a display chip, the projection light source system comprising:
a light source module configured to emit a laser beam;
a light guiding system disposed in an optical path of the laser beam and configured to adjust an emission direction of the laser beam;
a fluorescent color wheel having a plurality of fluorescent excitation regions of different colors, wherein the light guiding system is configured to guide the laser beam to the fluorescent color wheel, the plurality of fluorescent excitation regions sequentially receive the laser beam, and each of the plurality of fluorescent excitation regions is configured to reflect an illumination beam under excitation of the laser beam; and
a reflector disposed opposite to the fluorescent color wheel and located in an optical path of the illumination beam, wherein the light guiding system is located between the fluorescent color wheel and the reflector to allow a part of the optical path of the illumination beam to overlap with a part of the optical path of the laser beam, and the reflector is configured to reflect the illumination beam to the display chip.

2. The projection light source system according to claim 1, wherein the light source module comprises a monochromatic laser emitter configured to emit the laser beam of a designated color, and the light guiding system comprises a filter disposed in the optical path of the laser beam and configured to reflect the laser beam of the designated color to the fluorescent color wheel.

3. The projection light source system according to claim 2, wherein the designated color is blue, and the filter is a blue-reflecting and yellow-transmitting filter.

4. The projection light source system according to claim 2, wherein the laser beam of the designated color excites the fluorescent color wheel to form the illumination beam, the filter is located in the optical path of the illumination beam and is configured to transmit the illumination beam, and the reflector is located on a side of the filter away from the fluorescent color wheel.

5. The projection light source system according to claim 2, wherein the light guiding system further comprises a focusing lens located between the monochromatic laser emitter and the filter, and the focusing lens is located in the optical path of the laser beam and is configured to converge the laser beam onto the filter.

6. The projection light source system according to any one of claims 2 to 5, wherein the light guiding system further comprises an illumination lens, the illumination lens is disposed between the filter and the fluorescent color wheel and is configured to transmit the laser beam and the illumination beam, and the illumination beam passes through the illumination lens and the filter and is transmitted to the reflector.

7. The projection light source system according to claim 6, wherein the reflector is configured to reflect the illumination beam to the display chip, the display chip generates a projection beam, and the projection beam is transmitted toward a space between the reflector and the light guiding system; and
an optical axis of the filter does not intersect with an optical axis of the illumination lens, the filter is located at an edge of the optical path of the illumination beam between the illumination lens and the reflector, and the filter is located outside an optical path of the projection beam.

8. The projection light source system according to any one of claims 1 to 5, wherein the light guiding system comprises an optical homogenizer located between the fluorescent color wheel and the reflector, the optical homogenizer has a first end surface and a second end surface opposite to each other, the first end surface faces the reflector, and the second end surface faces the fluorescent color wheel; and
the laser beam is transmitted to the optical homogenizer via the first end surface, and homogenized by the optical homogenizer, and diverges to the fluorescent color wheel via the second end surface to form the illumination beam, and the illumination beam is transmitted to the optical homogenizer via the second end surface and transmitted to the reflector via the first end surface.

9. The projection light source system according to claim 8, wherein a ratio between an area of the first end surface and an area of the second end surface is 6.25:1, and/or
the first end surface is rectangular, and a length ratio of two adjacent side edges of the first end surface is 2:1, and/or
the second end surface is rectangular, and a length ratio of two adjacent side edges of the second end surface is 2:1.

10. The projection light source system according to any one of claims 1 to 5, wherein the reflector has a reflective concave surface, the reflective concave surface is an aspherical surface, the illumination beam is transmitted toward the display chip after being reflected via the reflective concave surface, and a range of an incident angle of the illumination beam on a surface of the display chip is greater than or equal to 23° and less than or equal to 25°.

11. A projection apparatus, comprising:
a display chip; and
the projection light source system according to any one of claims 1 to 10, wherein the projection light source system is configured to form the illumination beam, and the display chip is disposed in the optical path of the illumination beam.

12. The projection apparatus according to claim 11, wherein the display chip is disposed corresponding to the reflector, the illumination beam is transmitted from the reflector to the display chip, the display chip receives the illumination beam and generates a projection beam, and the projection beam is emitted toward a space between the reflector and the fluorescent color wheel and intersects with the illumination beam.

13. The projection apparatus according to claim 11 or 12, further comprising a projection lens, wherein the display chip and the projection lens are arranged at intervals along a principal optical axis of the projection lens, and
wherein when the projection apparatus is projected onto a plane of the principal optical axis of the projection lens, a projection of the reflector and a projection of the light guiding system are both located between the display chip and the projection lens.
